# EUROPÄISCHE PATENTANMELDUNG

(11) **EP 0 665 635 A2**
(43) Veröffentlichungstag der Anmeldung: **02.08.1995**
(21) Anmeldenummer: 95100733.5
(22) Anmeldetag: 20.01.1995
(51) Int. Cl.: H02M 7/48

(54) **Beschaltung für einen Dreipunktwechselrichter**

(30) Priorität: 26.01.1994 DE 4402161
(71) Anmelder: ABB PATENT GmbH, D-68309 Mannheim (DE)
(72) Erfinder: Sartor, Gerhard, D-67310 Hettenleidelheim (DE)
(74) Vertreter: Rupprecht, Klaus, Dipl.-Ing.

(57) **Zusammenfassung**

Es wird eine Beschaltung für einen Dreipunktwechselrichter mit vier in Reihe zwischen einem positiven Anschluß (1) und einem negativen Anschluß (5) einer Gleichspannungsversorgung (9,10) angeordneten Schaltelementen (V1,V2,V3,V4) vorgeschlagen, wobei der gemeinsame Verbindungspunkt (5) der beiden inneren Schaltelemente (V2,V3) den Lastanschluß bildet und jeder Verbindungspunkt (2,4) eines äußeren (V1,V4) mit einem inneren Schaltelement (V2,V3) über eine Mittelpunktdiode (V5,V6) mit einem mittleren Anschluß (8) der Gleichspannungsversorgung verbunden ist. Erfindungsgemäß ist jedem inneren Schaltelement (V2,V3) die Reihenschaltung eines Beschaltungskondensators (C2,C3) mit einer Beschaltungsdiode (V21,V31) parallelgeschaltet. Die Verbindungspunkte (11,12) eines Beschaltungskondensators mit einer Beschaltungsdiode sind jeweils über die Reihenschaltung einer Entladediode (V22,V32) mit einer Entladeimpedanz (Z2,Z3) derart mit dem positiven bzw. negativen Anschluß der Gleichspannungsversorgung verbunden, daß eine Entladung eines Beschaltungskondensators erfolgt, sobald beide inneren Schaltelemente gemeinsam eingeschaltet sind.

## Beschreibung

Die Erfindung bezieht sich auf eine Beschaltung für einen Dreipunktwechselrichter mit vier in Reihe zwischen einem positiven Anschluß und einem negativen Anschluß einer Gleichspannungsversorgung angeordneten Schaltelementen, wobei der gemeinsame Verbindungspunkt der beiden inneren Schaltelemente den Lastanschluß bildet und jeder Verbindungspunkt eines äußeren mit einem inneren Schaltelement über eine Mittelpunktdiode mit einem mittleren Anschluß der Gleichspannungsversorgung verbunden ist.

Ein derartiger Dreipunktwechselrichter ist aus etz Archiv Bd. 10 (1988) H. 7, S. 215 bis 220 bekannt.

Der Erfindung liegt die Aufgabe zugrunde, eine Beschaltung für einen Dreipunktwechselrichter der eingangs genannten Art anzugeben, die die inneren (mittleren) Schaltelemente einer Dreipunktwechselrichter-Phasenanordnung vor Überspannungen schützt, die durch die in den Streuinduktivitäten des Stromrichteraufbaus gespeicherte Energie bei Schaltvorgängen hervorgerufen werden.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß die vorgeschlagenen Schutzbeschaltungen ausreichend wirksam sind, da die Beschaltungsbauelemente unmittelbar an den zu schützenden Halbleiterschaltern angeordnet sind. Die durch die Funktionsweise der Beschaltung verursachte Verlustleistung ist gering.

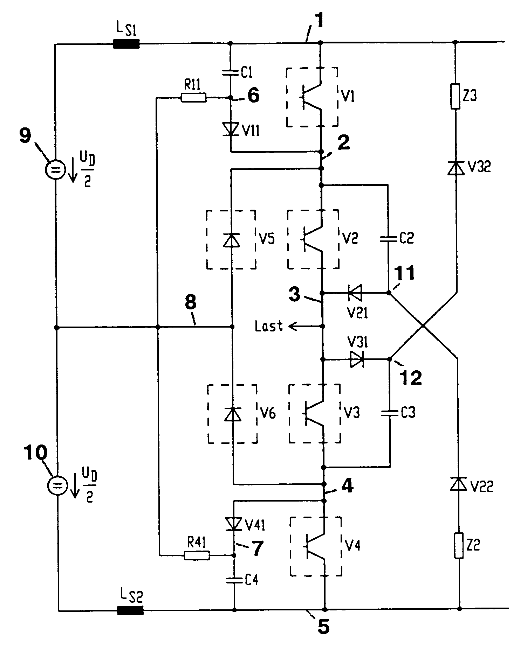

Die Erfindung wird nachstehend anhand des in der einzigen Figur dargestellten Ausführungsbeispieles erläutert.

In der einzigen Figur ist eine Phase (ein Strang) eines Dreipunktwechselrichters mit Beschaltungen dargestellt. Die Phase des Dreipunktwechselrichters weist vier in Serie geschaltete Schaltelemente V1, V2, V3, V4 auf. Die Schaltelemente V1....V4 sind beispielsweise als Transistoren (ohne die in Wechselrichtern notwendigen Rückarbeitsdioden) gezeichnet, es sind jedoch auch andere Halbleiterschalter einsetzbar.

Schaltelement V1 liegt zwischen zwei Verbindungspunkten 1 und 2, wobei Verbindungspunkt 1 an den positiven Pol einer ersten Gleichspannungsquelle 9 angeschlossen ist und den positiven Anschluß der Gleichspannungsversorgung bildet und Verbindungspunkt 2 zum Schaltelement V2 führt. Schaltelement V2 liegt andererseits am Verbindungspunkt 3, der gleichzeitig den Lastanschluß der Phase darstellt und an den auch Schaltelement V3 angeschlossen ist. Der Verbindungspunkt der Schaltelemente V3 und V4 ist mit Ziffer 4 bezeichnet. Schaltelement V4 ist andererseits über Verbindungspunkt 5 an den negativen Pol einer zweiten Gleichspannungsquelle 10 angeschlossen, d.h. Verbindungspunkt 5 bildet den negativen Anschluß der Gleichspannungsversorgung.

Die Streuinduktivitäten des Stromrichteraufbaues werden durch Lₛ₁ bzw. Lₛ₂ repräsentiert und sind in die Verbindungen zwischen Gleichspannungsquelle 9 und Verbindungspunkt 1 bzw. Gleichspannungsquelle 10 und Verbindungspunkt 5 eingezeichnet.

Der gemeinsame Verbindungspunkt 8 beider Gleichspannungsquellen 9, 10 - an denen jeweils die Spannung U_{D}/2 ansteht - bildet den mittleren Anschluß der Gleichspannungsversorgung. Eine Mittelpunktdiode V5 liegt zwischen den Verbindungspunkten 2 und 8 und eine weitere Mittelpunktdiode V6 zwischen den Verbindungspunkten 4 und 8.

Der Lastanschluß 3 kann mit drei unterschiedlichen Potentialen der Gleichspannungsversorgung verbunden werden:
- mit dem positiven Anschluß durch Einschalten von V1 und V2,
- mit dem mittleren Anschluß durch Einschalten von V2 oder V3,
- mit dem negativen Anschluß durch Einschalten von V3 und V4.

Um die in den Streuinduktivitäten Lₛ₁, Lₛ₂ gespeicherte Energie beim Abschaltvorgang der Schaltelemente mit geringer Spannungsüberhöhung zwischenzuspeichern und anschließend abzubauen, sind Klemmbeschaltungen C1/V11/R11 bzw. C4/V41/R41 für die äußeren Schaltelemente V1, V4 vorgesehen. Der Beschaltungskondensator C1, die Beschaltungsdiode V11 und der Entladewiderstand R11 weisen einen gemeinsamen Verbindungspunkt 6 auf. Andererseits sind C1 am Verbindungspunkt 1, V11 am Verbindungspunkt 2 und R11 am Verbindungspunkt 8 angeschlossen.

In gleicher Art weisen der Beschaltungskondensator C4, die Beschaltungsdiode V41 und der Entladewiderstand R41 einen gemeinsamen Verbindungspunkt 7 auf. Andererseits sind C4 am Verbindungspunkt 5, V41 am Verbindungspunkt 4 und R41 am Verbindungspunkt 8 angeschlossen.

Die vorstehend beschriebenen Klemmbeschaltungen sind jedoch für die inneren (mittleren) Schaltelemente V2, V3 nicht anwendbar, da keiner deren Anschlüsse auf gegenüber der Gleichspannungsversorgung festem Potential liegt.

Zur Zwischenspeicherung der in den Streuinduktivitäten Lₛ₁, Lₛ₂ gespeicherten Energie beim Abschaltvorgang der mittleren Schaltelemente V2, V3 und anschließendem Energieabbau werden deshalb eine Beschaltung C2/V21/V22/Z2 für das Schaltelement V2 sowie eine Beschaltung C3/V31/V32/Z3 für das Schaltelement V3 eingesetzt.

Die Beschaltung C2/V21/V22/Z2 weist dabei einen gemeinsamen Verbindungspunkt 11 des Beschaltungskondensators C2, der Beschaltungsdiode V21 und der Entladediode V22 auf. C2 liegt andererseits am Verbindungspunkt 2, V21 am Verbindungspunkt 3 und V22 über der Entladeimpedanz Z2 am Verbindungspunkt 5.

Die Beschaltung C3/V31/V32/Z3 weist in gleicher Art einen gemeinsamen Verbindungspunkt 12 des Beschaltungskondensators C3, der Beschaltungsdiode V31 und der Entladediode V32 auf. C3 liegt andererseits am Verbindungspunkt 4, V31 am Verbindungspunkt 3 und V32 über der Entladeimpedanz Z3 am Verbindungspunkt 1.

Die Entladeimpedanzen Z2, Z3 können als ohmsche Widerstände ausgebildet sein oder durch eine Widerstands-Drossel-Reihenschaltung realisiert werden, durch die die Entladung gedämpft stattfindet.

Die Wirkungsweise der Beschaltungen wird am Beispiel von C2/V21/V22/Z2 für das innere Schaltelement V2 erläutert. Nach dem Ausschalten des Schaltelementes V2 fließt über die Beschaltungsdiode V21 solange ein Beschaltungsstrom in den Beschaltungskondensator C2, bis der Stromfluß in den Streuinduktivitäten an den neuen Schaltzustand angepaßt ist: siehe Pfad 2-C2-11-V21-3. Dabei steigt die Spannung am Beschaltungskondensator C2 über U_{D}/2 an. Diese erhöhte Kondensatorspannung bleibt solange erhalten, bis die Schaltelemente V2, V3 gemeinsam eingeschaltet werden. Dann findet über die durch die Schaltelemente V2, V3, die Mittelpunktdiode V6 sowie die Entladediode V22 mit Entladeimpedanz Z2 gebildeten Strompfade eine Entladung des Beschaltungskondensators C2 statt, wodurch der Ausgangszustand wieder hergestellt wird: siehe Pfad Z2-V22-11-C2-2-V2-3-V3-4-V6-8.

Die Arbeitsweise der Beschaltung C3/V31/V32/Z3 für das Schaltelement V3 ist analog hierzu.

## Patentansprüche

1. Beschaltung für einen Dreipunktwechselrichter mit vier in Reihe zwischen einem positiven Anschluß (1) und einem negativen Anschluß (5) einer Gleichspannungsversorgung (9,10) angeordneten Schaltelementen (V1,V2,V3,V4), wobei der gemeinsame Verbindungspunkt (5) der beiden inneren Schaltelemente (V2,V3) den Lastanschluß bildet und jeder Verbindungspunkt (2,4) eines äußeren (V1,V4) mit einem inneren Schaltelement (V2,V3) über eine Mittelpunktdiode (V5,V6) mit einem mittleren Anschluß (8) der Gleichspannungsversorgung verbunden ist, dadurch gekennzeichnet, daß jedem inneren Schaltelement (V2,V3) die Reihenschaltung eines Beschaltungskondensators (C2,C3) mit einer Beschaltungsdiode (V21,V31) parallelgeschaltet ist und daß die Verbindungspunkte (11,12) eines Beschaltungskondensators mit einer Beschaltungsdiode jeweils über die Reihenschaltung einer Entladediode (V22,V32) mit einer Entladeimpedanz (Z2,Z3) derart mit dem positiven bzw. negativen Anschluß der Gleichspannungsversorgung verbunden sind, daß eine Entladung eines Beschaltungskondensators erfolgt, sobald beide inneren Schaltelemente gemeinsam eingeschaltet sind.

2. Beschaltung für einen Dreipunktwechselrichter nach Anspruch 1, gekennzeichnet durch einen ohmschen Widerstand als Entladeimpedanz (Z2,Z3).

3. Beschaltung für einen Dreipunktwechselrichter nach Anspruch 1, gekennzeichnet durch die Reihenschaltung einer Drossel mit einem ohmschen Widerstand als Entladeimpedanz (Z2,Z3).
